# EUROPEAN PATENT APPLICATION

(11) **EP 4 191 416 A1**
(43) Date of publication of application: **07.06.2023**
(21) Application number: 22201862.4
(22) Date of filing: 17.10.2022
(51) Int. Cl.: G06F 11/34

(54) **PROGRAMMABLE PERFORMANCE MONITORING UNIT SUPPORTING SOFTWARE-DEFINED PERFORMANCE MONITORING EVENTS**

(30) Priority: 03.12.2021 US 202117541246
(71) Applicant: INTEL Corporation, Santa Clara, CA 95054 (US)
(72) Inventor: ZHANG, Zheng, Portland, 97229 (US); GHOSH, Rahuldeva, Portland, 97229 (US)
(74) Representative: Maiwald GmbH

(57) **Abstract**

A processor includes one or more processing cores, and a performance monitoring unit (PMU), the PMU including one or more performance monitoring counters; a PMU memory to store a PMU kernel, the PMU kernel including one or more programmable PMU functions; and a PMU processor to load the PMU kernel and concurrently execute the one or more programmable PMU functions of the PMU kernel to concurrently access the one or more performance counters.

## Description

### FIELD

Embodiments relate generally to computer processors, and more particularly, to a programmable performance monitoring unit of a processor in a computing system supporting software-defined performance monitoring events.

### BACKGROUND

A performance monitoring unit (PMU) in a processor was originally designed to aid in hardware and/or software debugging tasks and computing system optimization, but recently the capabilities provide by the PMU have been increasingly used in various other problem domains (e.g., security, device health, power and performance optimization, cloud workload monitoring, etc.). As the PMU is becoming more widely used for these other problem domains, there are increasing demands to add more PMU events for more specialized use cases and to share PMU resources with multiple consumers of event data. However, current PMU architectures in processors have fixed designs in processor circuitry and these PMU architectures are unable to be quickly adapted to meet the diverse requirements of new PMU use cases.

### BRIEF DESCRIPTION OF THE DRAWINGS

So that the manner in which the above recited features of the present embodiments can be understood in detail, a more particular description of the embodiments, briefly summarized above, may be had by reference to embodiments, some of which are illustrated in the appended drawings. It is to be noted, however, that the appended drawings illustrate only typical embodiments and are therefore not to be considered limiting of its scope. The figures are not to scale. In general, the same reference numbers will be used throughout the drawings and accompanying written description to refer to the same or like parts.
Figure 1 is a diagram of a processor including a performance monitoring unit (PMU) according to some embodiments.
Figure 2 is a diagram of a PMU arrangement including a PMU processor according to some embodiments.
Figure 3 is a diagram of buffer overflow processing according to some embodiments.
Figure 4 is a flow diagram of processing of software-defined performance monitoring events according to some embodiments.
Figure 5 is a schematic diagram of an illustrative electronic computing device to perform processing of software-defined performance monitoring events according to some embodiments.

### DETAILED DESCRIPTION

Implementations of the technology described herein provide a method and system wherein a PMU processor added to the PMU may be dynamically programmed by software (SW) processes being executed by a process to add new SW-defined PMU events without upgrading processor circuitry. The technology also defines a mechanism to share resources of the PMU (such as data from PMU counters) with multiple SW processes.

Existing processors include PMUs with system architectures and most PMU counters implemented in fixed circuitry which cannot be changed after manufacturing. Although some PMU counters can be implemented using microcode, there is no existing mechanism for SW developers to define and deploy new microcode-based PMU counters. One way for SW developers to request new PMU events designed into processors is to submit their requests to processor designers and/or manufacturers. Processor designers may gather new PMU requirements from SW developers and prioritize which requirements will be implemented in the next generation of processors to be manufactured.

PMU counters are exposed to SW processes through a set of hardware (HW)-defined PMU model specific registers (MSRs). These PMU counters are global and can be shared by SW processes with appropriate privileges. Currently, there is no HW-based solution to manage PMU resource sharing. Although some operating systems (OSs), such as LINUX, provide a function (such as "perf') that implements a SW-based sharing mechanism, access to the PMU counters is still limited by the fixed design of the PMU circuitry on the maximum number of PMU counters with which the PMU can concurrently collect data. If more counters than the HW-supported limit are desired, the OS function (such as LINUX "perf') must perform time multiplexing operations to rotate through all PMU counters (e.g., in a round-robin manner). This time multiplexing reduces the accuracy and the coverage of the PMU counters and is not scalable if more SWs request access to PMU counters that can be handled by the time multiplexing processing.

The technology described herein provides a programmable PMU processor in the PMU of a processer that can be dynamically programmed by SW processes to execute SW-defined PMU logic. The PMU includes a HW-based sharing mechanism to allow multiple SW processes to program the PMU processor and to concurrently collect data for PMU events without conflicts. An OS-based SW process, called a PMU driver herein, manages concurrent PMU accesses by SW processes. These capabilities enable SW developers to create more innovative PMU-based solutions for processors, enables processor designers and/or manufacturers to continuously improve PMUs even after manufacturing, and enables multiple SW processes to share PMU resources (such as PMU counter data) without conflicts.

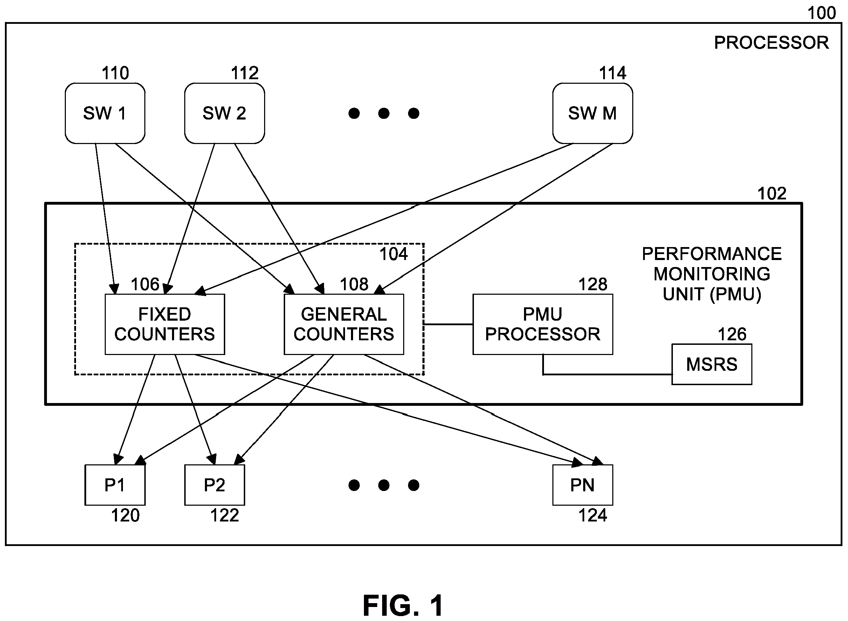

Figure 1 is a diagram of a processor 100 including a PMU 102 according to some embodiments. Processor 100 includes any number of hardwired or configurable circuits, some or all of which may include programmable and/or configurable combinations of electronic components, semiconductor devices, and/or logic elements that are disposed partially or wholly in a personal computer (PC), server, mobile phone, tablet computer, or other computing system capable of executing processor-readable instructions. PMU 102 circuitry includes any number and/or combination of any currently available or future developed electronic devices and/or semiconductor components capable of monitoring one or more performance aspects and/or parameters of processor 100. PMU 102 may have any number and/or combination of performance monitoring counters 104. Counters 104 are used to count events that occur during processing by processor 100. In embodiments, PMU 102 includes circuitry to monitor, track, and/or count processor activity. For example, in an Intel^{®} processor, PMU 102 circuitry may be at least partially included or otherwise embodied in a performance monitoring unit (PMU).

In some implementations, PMU 102 may include one or more configurable or programmable elements, such as one or more configurable integrated circuits, capable of executing machine-readable instruction sets that cause the configurable or programmable elements to combine in a particular manner to create the PMU 102 circuitry. In some implementations, the PMU 102 circuitry may include one or more stand-alone devices or systems, for example, the PMU 102 circuitry may be embodied in a single surface- or socket-mount integrated circuit. In other implementations, the PMU 102 circuitry may be provided in whole or in part via one or more processors, controllers, digital signal processors (DSPs), reduced instruction set computers (RISCs), systems-on-a-chip (SOCs), application specific integrated circuits (ASICs) capable of providing all or a portion of processors 100.

The counters 104 may include any number and/or combination of currently available and/or future developed electrical components, semiconductor devices, and/or logic elements capable of monitoring, tracking, and/or counting events in processor 100. Counters 104 include fixed counters 106 and general counters 108. Fixed counters 106 include a plurality of counters that are permanently assigned to monitor, track, and/or count specified events occurring in processor 100. General counters 108 include a plurality of counters that may be programmed by firmware to monitor, track, and/or count defined events or conditions occurring in processor 100.

In an embodiment, processor 100 includes a plurality of processing cores P1 **120, P2 122, ... PN 124, where N is a natural number.** Processing cores P1 120, P2 122, **... PN 124 may read and/or** write any of the fixed counters 106 and/or general counters 108. PMU 102 includes a plurality of model specific registers (MSRs) 126 to store information to be read and/or written by the plurality of processing cores P1 120, P2 122, **... PN 124.**

Processor 100 executes instructions for a plurality of SW processes SW 1 110, **SW 2 112, ... SW M 114, where M is a natural numb**er. The SW processes may read and/or write MSRs 126 in PMU 102.

In practice, there are a limited number of counters 104 included in the design of PMU 102 that can be programmed by SW processes to collect data associated with HW-defined PMU events. Accordingly, SW processes cannot collect data on additional PMU events that are not supported by the current design of processor 100 circuitry. In addition, SW processes may compete for the limited resources of PMU counters 104. This may result in resource contention and possible tampering of access to the counters.

In an embodiment, processor 100 includes PMU 102 having PMU processor 128. PMU processor 128 provides a capability of executing code that can be programmed and/or provided by one or more of the S**W processes SW 1 110, SW 2 112, ... SW M** 114. In an embodiment, at least one of the SW processes is at least a portion of an OS. PMU processor 128 may include one or more configurable or programmable elements, such as one or more configurable integrated circuits, capable of executing machine-readable instruction sets that cause the configurable or programmable elements to combine in a particular manner to create the PMU processor 128 circuitry.

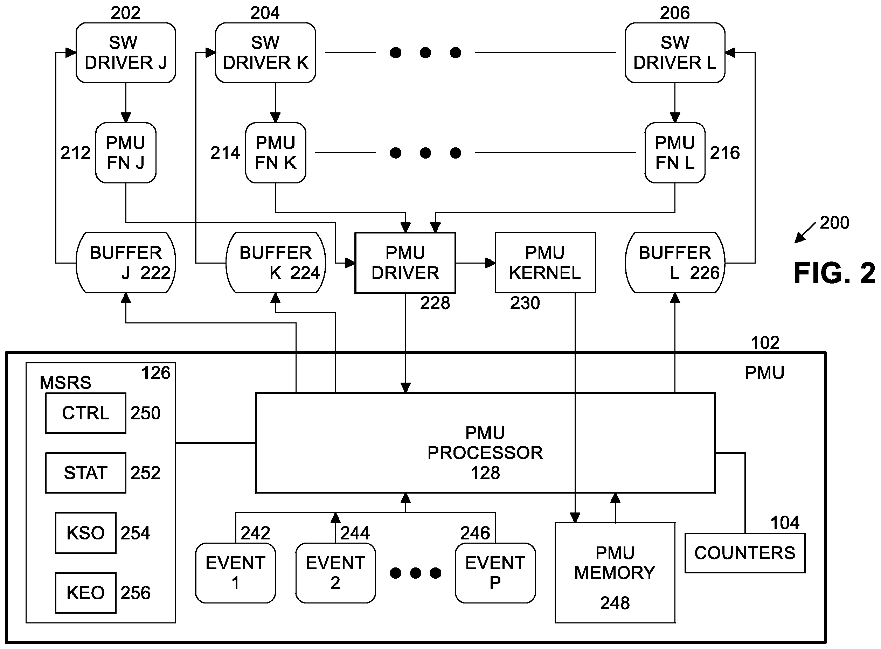

Figure 2 is a diagram of a PMU arrangement 200 **including a PMU processor** according to some embodiments. A plurality of SW drivers, such as SW driver J 202, SW **driver K 204, ... SW driver L 206, collec**t data from both HW-defined and SW-defined PMU events. A SW driver may define a PMU function comprising a SW program developed by a SW developer. A PMU function includes one or more specifications of PMU events, such as one or more of **event 1 242, event 2 244, ... event P 246, where P** is a natural number, and a buffer, allocated by the SW driver, to receive event data. For example, SW driver J 202 defines PMU function (FN) J 212 and reads event or other data from PMU 102 from buffer J 222, SW driver K 204 defines PMU FN K 214 and reads event or other data from PMU 102 from buffer K 224, ... **SW driver** L 206 defines PMU FN L 216 and reads event or other data from PMU 102 from buffer L 226. In embodiments, there may be any number of SW drivers, buffers, and events. As depicted in Figure 2, there is only one PMU FN defined by a SW driver and only one buffer associated with a SW driver, however, in various embodiments there may be any number of PMU FNs defined by any SW driver and any number of buffers read by any SW driver.

A PMU function may specify and/or select one or more HW-defined or SW-defined PMU ev**ents (e.g., event 1 242, event 2 244, ... event** P 246). A PMU function may be represented in either text or binary format. The specification of HW-defined events includes the information needed to select and configure the HW-defined PMU events. In an embodiment, a HW-defined PMU event includes data being written to at least one counter 104. The specification of SW-defined events may include one or more of the following information: 1) Event triggers specify when an event should be triggered. Example triggers include the occurrence of a HW event, an interrupt, an instruction retire, a processor clock cycle, etc. 2) Event inputs specify the input data required to calculate an event. Example inputs include one or multiple HW-defined PMU events, processor register values, OS and/or virtual machine (VM) context switches, and other processor internal states that were previously inaccessible by SW processes. 3) Event logic specifies the logic to calculate a SW-defined event using the input data.

Besides specifying SW-defined PMU events, PMU functions may include custom logic to process and transfer non-PMU telemetry data (e.g., processor trace (PT) and processor event-based sampling (PEBS) data). A PMU function may include functional logic to decode a PT trace and store the decoded results into a buffer (e.g., one **of buffer J 222, buffer K 224, ... buffer L 226**). A PMU function may include functional logic to preprocess PEBS data records and store the processed results into a buffer.

SW drivers send PMU configuration requests to PMU driver 228. A PMU configuration request includes a PMU function (e.g., one of PMU FN J 212, PMU FN K **214, ... PMU FN L 216)**, an identification of a buffer **(e.g., one of buffer J 222, buffer K 224, ... buffer L 226) to store collected PMU data from PMU 102, and a callback function that will be triggered by PMU driver 228, when its buffer (e.g., buffer J 222, K 224, ... L226) overflows. PMU driver 228 processes PMU configuration requests received from SW drivers, compiles PMU functions into PMU kernel 230 (using a compiler, not shown in** **Figure 2****), and configures PMU processor 128 to execute PMU kernel 230. PMU kernel 230 is a memory structure that can be directly executed by PMU processor 128. PMU kernel 230** may include one or more of the following information: 1) Number of PMU functions included in this kernel; 2) Metadata of each PMU FN (including event triggers, event inputs, output buffers, start and end offsets of the PMU function bodies); and 3) PMU function bodies (e.g., code to perform, when executed by PMU processor 128, desired logic). **Depending on an implementation of PMU processor 128, PMU kernel 230 may include binary assembly language instructions (when PMU processor 128 is a microprocessor execution unit) or a field programmable gate array (FPGA) kernel (when PMU processor 128 is an FPGA).**

**In an embodiment, SW drivers (e.g., SW driver J 202, SW driver K 204, ...** SW driver L 206) and PMU driver 228 are executed by processor 100.

In an embodiment, PMU Driver 228 configures PMU 102 through a set of PMU MSRs 126, which may include one or more of: 1) A control (CTRL) MSR 250 for PMU driver 228 to enable, disable, pause and resume PMU processor 128; 2) A status (STAT) MSR 250 for PMU driver 228 to capture the status of PMU processor 128 and an index of a current interrupting PMU Function; 3) A PMU kernel start offset (KSO) configuration MSR 254 for PMU driver 228 to configure the start offset of a memory structure for PMU kernel 230; and 4) A PMU kernel end offset (KEO) configuration MSR 256 for PMU Driver to configure the size or the end offset of the PMU kernel 230 memory structure.

**In an embodiment, PMU driver 228 configures PMU** 102, including one or more of the following actions: 1) PMU driver 228 updates the PMU control MSR 250 to disable PMU 102; 2) PMU driver 228 updates the value of PMU kernel start offset configuration MSR 254 to the start offset of the PMU kernel memory structure; 3) PMU driver 228 updates the value of the PMU kernel end offset configuration MSR 256 to the end offset of the PMU kernel memory structure; 4) PMU driver 228 updates the PMU control MSR 250 to enable PMU 102; and 5) Upon enablement, PMU 102 parses the PMU kernel memory structure, initializes PMU Processor 128 and PMU memory 248 and starts the PMU data collection process.

**In embodiments, a memory or similar storage device PMU memory 248 may be integral with or coupled to the PMU 102 circuitry. The PMU 102 may cause the storage of some or all the data from counters 104 in the PMU memory 248. In at least some embodiments, some or all the data stored in the PMU memory may be accessible to a SW process of processor 100. PMU driver 228 may store PMU kernel 230 in PMU memory 248. PMU processor 128 may read PMU kernel 230 from PMU memory 248 prior to executing the instructions of PMU kernel 230.**PMU processor 128 executes the PMU kernel 230 (including one or more PMU functions) and outputs PMU data to the buffers (e.g., buffer **J 222, buffer K 224,** ... **buffer L 226)** specified by the SW drivers. Thus, the technology described herein enables SW processes, via SW drivers to define their own events in the PMU 102. PMU processor 128 directly interfaces the existing HW-based PMU 102 and other components of processor 0100 (for example, a memory management unit MMU, an arithmetic logic unit ALU, a floating-point processing unit (FPU), etc.) to configure and collect HW-based PMU events and other non-PMU-based processor data. The PMU processor 128 concurrently executes all PMU functions included within the PMU kernel 230 either in parallel or in sequential. The results of concurrent execution of the PMU functions are output to one or more buffers specified by SW drivers.

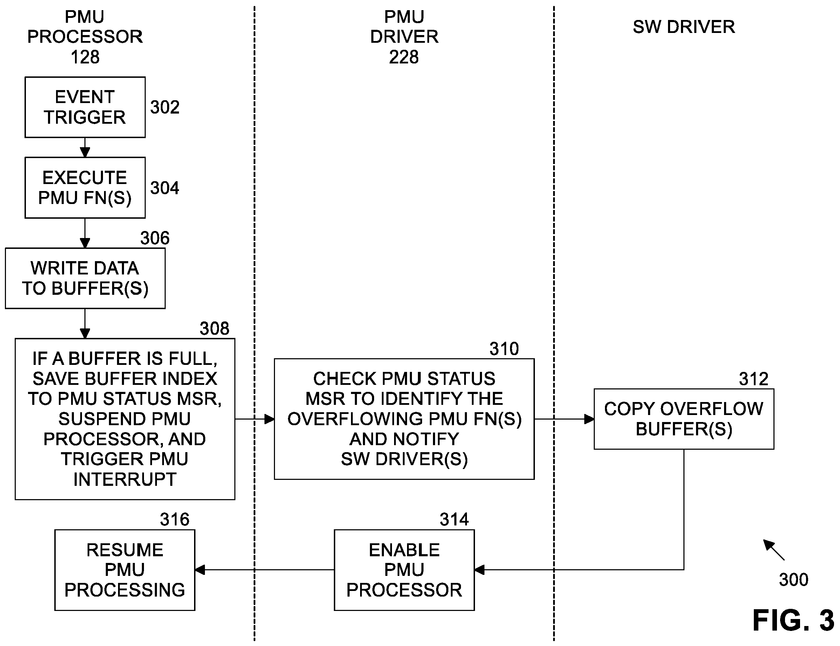

**Figure 3** **is a diagram of buffer overflow processing according to some embodiments.** When a PMU event trigger is fired at block 302, PMU processor 128 identifies one or more PMU functions (e.g., one or more of PMU FN J 212, PMU FN K **214, ... PMU FN L 216)** that registered for the PMU event and executes the one or more PMU functions to use the data from the PMU event. At block 306, the one or more PMU functions writes the result(s) of executed PMU function logic into respective one or more buffers (e.g., one or more of buffer **J 222, buffer K 224, ... buffer L 226).** At block 308, if one or more of the buffers becomes full, PMU processor 128 saves indices of overflowing buffers for the corresponding PMU functions into the PMU status MSR 252, suspends PMU processing and triggers an PMU interrupt. PMU driver 228 is notified of the PMU interrupt in an embodiment through a pre-registered PMU interrupt handler. At block 310, PMU driver 228 queries the PMU status MSR 252 to identify the interrupting (overflowing) PMU function(s) and notifies the corresponding SW driver(s) of the buffer overflowing events through SW callback functions. At block 312, In an embodiment, the corresponding SW driver(s) copies the PMU data out of the overflowing buffer(s) into a new (larger) buffer. In an embodiment, only the overflowing data is written to a new (additional) buffer. At block 314, after the data from the overflowing buffer(s) has been saved into a new buffer(s), PMU driver 228 enables PMU processor 128 and at block 316 the PMU processor resumes PMU processing.

PMU processor 128 may be used as a HW accelerator to accelerate the processing of PT and PEBS data. PMU processor 128 may decode and preprocess PT packets and store the decoded PT data into the buffers. PMU processor 128 may also preprocess PEBS data records and store the processed output data into one or more buffers.

PMU 102 now allows multiple SW processes (via SW drivers) to share PMU resources. Multiple PMU functions may be independently and concurrently executed by PMU processor 128. This helps to solves the configuration sharing issue in existing HW PMU solutions, where only one PMU configuration can be executed at a time. The output data of multiple PMU functions are written into separate SW-provided buffers. This addresses another limitation of existing HW PMU solutions, which can output the PMU counter values through either a common set of HW-defined MSRs or a single global memory buffer that are shared by all SW processes.

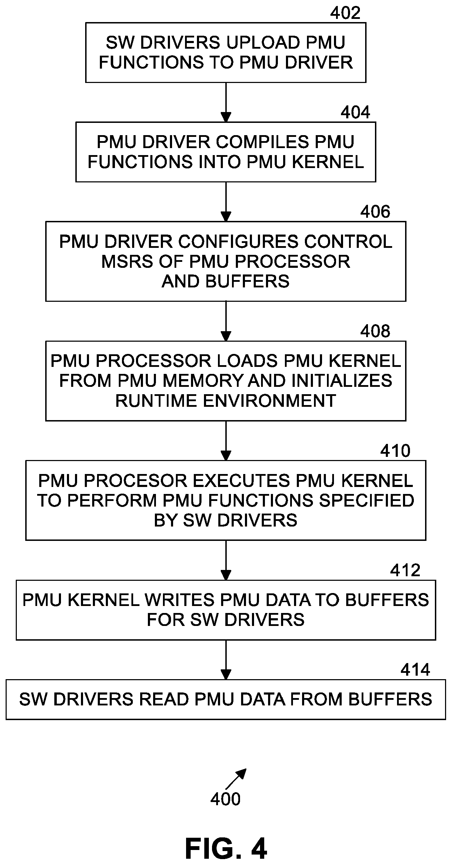

Figure 4 is a flow diagram 400 of processing of software-defined performance monitoring events according to some embodiments. At block 402, one or more SW **drivers (e.g., one or more of SW driver J 202, SW driver K 204, ... SW driver L 206)** upload one or more PMU configurations to PMU driver 228. A PMU configuration include at least a PMU function (e.g., one or more of **PMU FN J 212, PMU FN K 214, ...** PMU FN L 216) and an identifier (ID) of one or more buffers (e.g., one or more of buffer **J 222, buffer K 224, ... buffer L 226).** At block 404, PMU driver 228 compiles the received PMU functions into a single PMU kernel 230, which can be directly executed by PMU processor 128. In an embodiment, the PMU kernel 230 is loaded into PMU memory 248. At block 406, PMU driver 228 configures one or more control MSRs 250 with information about the PMU kernel and the specified buffers. At block 408, PMU processor 128 loads the PMU kernel 230 from PMU memory 248 and initializes a runtime environment. For a FPGA-based PMU processor, the PMU processor reprograms the FPGA with the new PMU kernel.

At block 410, PMU processor 128 executes PMU kernel 230 to perform one or more PMU functions specified by the SW drivers. In an embodiment, at least one PMU function computes SW-defined PMU events based on HW-defined PMU events (such as updates to counters 104) and other non-PMU based HW and SW information. As an example, a PMU function may use the information of executed instructions or micro-code by processor 100 to calculate histograms of instruction or micro-code opcodes. As another example, another PMU function may calculate a separate PMU event for each SW thread by using the processor 100 architecture values from one or more of the control register 3 (CR3) or FS and GS segment registers. At block 412, PMU kernel 230 writes PMU data resulting from the computations of PMU functions from block 410 into one or more buffers specified by the respective SW drivers. For example, PMU processor 128 executes PMU FN J 212 provided by SW driver J 202 and writes the resulting data into buffer J 222. At block 414, one or more SW drivers read the PMU data from the one or more buffers. For example, SW driver J 202 reads buffer J 222 to get the PMU data resulting from execution of PMU FN J 212. In an embodiment, a SW driver reads a buffer at regular intervals or as a result of a PMI interrupt, which may be triggered when the buffer becomes full. The SW driver then uses the PMU data from the buffer for any desired processing on processor 100.

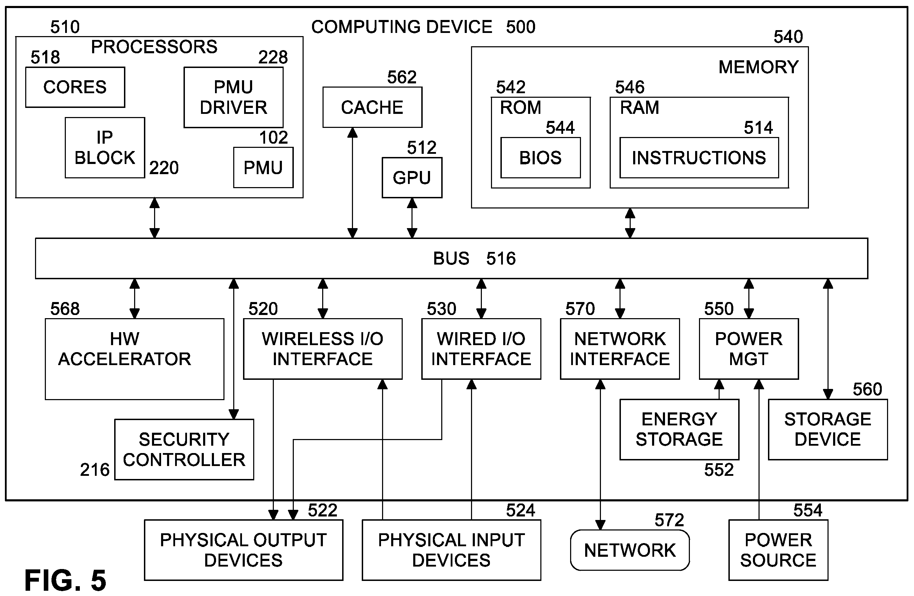

Figure 5 is a schematic diagram of an illustrative electronic computing device to perform processing of software-defined performance monitoring events according to some embodiments. In some embodiments, computing device 500 includes one or more processors 510 including PMU 102 and to execute PMU driver 228. In some embodiments, the computing device 500 includes one or more hardware accelerators 568.

In some embodiments, the computing device is to implement processing of software-defined performance monitoring events, as provided in Figures 1-4 above.

The computing device 500 may additionally include one or more of the following: cache 562, a graphical processing unit (GPU) 512 (which may be the hardware accelerator in some implementations), a wireless input/output (I/O) interface 520, a wired I/O interface 530, system memory 540, power management circuitry 580, non-transitory storage device 560, and a network interface 570 for connection to a network 572. The following discussion provides a brief, general description of the components forming the illustrative computing device 500. Example, non-limiting computing devices 500 may include a desktop computing device, blade server device, workstation, laptop computer, mobile phone, tablet computer, personal digital assistant, or similar device or system.

In embodiments, the processor cores 518 are capable of executing machine-readable instruction sets 514, reading data and/or machine-readable instruction sets 514 from one or more storage devices 560 and writing data to the one or more storage devices 560. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like. For example, machine-readable instruction sets 514 may include instructions to implement security processing, as provided in Figures 1-4.

The processor cores 518 may include any number of hardwired or configurable circuits, some or all of which may include programmable and/or configurable combinations of electronic components, semiconductor devices, and/or logic elements that are disposed partially or wholly in a PC, server, mobile phone, tablet computer, or other computing system capable of executing processor-readable instructions.

The computing device 500 includes a bus 516 or similar communications link that communicably couples and facilitates the exchange of information and/or data between various system components including the processor cores 518, the cache 562, the graphics processor circuitry 512, one or more wireless I/O interface 520, one or more wired I/O interfaces 530, one or more storage devices 560, and/or one or more network interfaces 570. The computing device 500 may be referred to in the singular herein, but this is not intended to limit the embodiments to a single computing device 500, since in certain embodiments, there may be more than one computing device 500 that incorporates, includes, or contains any number of communicably coupled, collocated, or remote networked circuits or devices.

The processor cores 518 may include any number, type, or combination of currently available or future developed devices capable of executing machine-readable instruction sets.

The processor cores 518 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in Figure 5 are of conventional design. Consequently, such blocks need not be described in further detail herein, as they will be understood by those skilled in the relevant art. The bus 516 that interconnects at least some of the components of the computing device 500 may employ any currently available or future developed serial or parallel bus structures or architectures.

The system memory 540 may include read**-only memory ("ROM")** 542 and random**-access memory ("RAM")** 546. A portion of the ROM 542 may be used to store **or otherwise retain a basic input/output system ("BIOS")** 544. The BIOS 544 provides basic functionality to the computing device 500, for example by causing the processor cores 518 to load and/or execute one or more machine-readable instruction sets 514. In embodiments, at least some of the one or more machine-readable instruction sets 514 cause at least a portion of the processor cores 518 to provide, create, produce, transition, and/or function as a dedicated, specific, and particular machine, for example a word processing machine, a digital image acquisition machine, a media playing machine, a gaming system, a communications device, a smartphone, a neural network, a machine learning model, or similar devices.

The computing device 500 may include at least one wireless input/output (I/O) interface 520. The at least one wireless I/O interface 520 may be communicably coupled to one or more physical output devices 522 (tactile devices, video displays, audio output devices, hardcopy output devices, etc.). The at least one wireless I/O interface 520 may communicably couple to one or more physical input devices 524 (pointing devices, touchscreens, keyboards, tactile devices, etc.). The at least one wireless I/O interface 520 may include any currently available or future developed wireless I/O interface. Example wireless I/O interfaces include, but are not limited to: BLUETOOTH^{®}, near field communication (NFC), and similar.

The computing device 500 may include one or more wired input/output (I/O) interfaces 530. The at least one wired I/O interface 530 may be communicably coupled to one or more physical output devices 522 (tactile devices, video displays, audio output devices, hardcopy output devices, etc.). The at least one wired I/O interface 530 may be communicably coupled to one or more physical input devices 524 (pointing devices, touchscreens, keyboards, tactile devices, etc.). The wired I/O interface 530 may include any currently available or future developed I/O interface. Example wired I/O interfaces **include but are not limited to universal serial bus (USB), IEEE 1394 ("FireWire"), and** similar.

The computing device 500 may include one or more communicably coupled, non-transitory, storage devices 560. The storage devices 560 may include one or more hard disk drives (HDDs) and/or one or more solid-state storage devices (SSDs). The one or more storage devices 560 may include any current or future developed storage appliances, network storage devices, and/or systems. Non-limiting examples of such storage devices 560 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more storage devices 560 may include one or more removable storage devices, such as one or more flash drives, flash memories, flash storage units, or similar appliances or devices capable of communicable coupling to and decoupling from the computing device 500.

The one or more storage devices 560 may include interfaces or controllers (not shown) communicatively coupling the respective storage device or system to the bus 516. The one or more storage devices 560 may store, retain, or otherwise contain machine-readable instruction sets, data structures, program modules, data stores, databases, logical structures, and/or other data useful to the processor cores 518 and/or graphics processor circuitry 512 and/or one or more applications executed on or by the processor cores 518 and/or graphics processor circuitry 512. In some instances, one or more data storage devices 560 may be communicably coupled to the processor cores 518, for example via the bus 516 or via one or more wired communications interfaces 530 (e.g., Universal Serial Bus or USB); one or more wireless communications interface 520 (e.g., Bluetooth^{®}, Near Field Communication or NFC); and/or one or more network interfaces 570 (IEEE 802.3 or Ethernet, IEEE 802.11, or Wi-Fi^{®}, etc.).

Machine-readable instruction sets 514 and other programs, applications, logic sets, and/or modules may be stored in whole or in part in the system memory 540. Such machine-readable instruction sets 514 may be transferred, in whole or in part, from the one or more storage devices 560. The machine-readable instruction sets 514 may be loaded, stored, or otherwise retained in system memory 540, in whole or in part, during execution by the processor cores 518 and/or graphics processor circuitry 512.

The computing device 500 may include power management circuitry 580 that controls one or more operational aspects of the energy storage device 582. In embodiments, the energy storage device 582 may include one or more primary (i.e., non-rechargeable) or secondary (i.e., rechargeable) batteries or similar energy storage devices. In embodiments, the energy storage device 582 may include one or more supercapacitors or ultracapacitors. In embodiments, the power management circuitry 580 may alter, adjust, or control the flow of energy from an external power source 584 to the energy storage device 582 and/or to the computing device 500. The external power source 584 may include, but is not limited to, a solar power system, a commercial electric grid, a portable generator, an external energy storage device, or any combination thereof.

For convenience, the processor cores 518, the graphics processor circuitry 512, the wireless I/O interface 520, the wired I/O interface 530, the storage device 560, and the network interface 570 are illustrated as communicatively coupled to each other via the bus 516, thereby providing connectivity between the above-described components. In alternative embodiments, the above-described components may be communicatively coupled in a different manner than illustrated in Figure 5. For example, one or more of the above-described components may be directly coupled to other components, or may be coupled to each other, via one or more intermediary components (not shown). In another example, one or more of the above-described components may be integrated into the processor cores 518 and/or the graphics processor circuitry 512. In some embodiments, all or a portion of the bus 516 may be omitted and the components are coupled directly to each other using suitable wired or wireless connections.

Flow charts representative of example hardware logic, machine readable instructions, hardware implemented state machines, and/or any combination thereof for implementing computing device 500, for example, are shown in Figures 3-4. The machine-readable instructions may be one or more executable programs or portion(s) of an executable program for execution by a computer processor such as the processor 510 shown in the example computing device 500 discussed above in connection with Figure 5. The program may be embodied in software stored on a non-transitory computer readable storage medium such as a CD-ROM, a floppy disk, a hard drive, a DVD, a Blu-ray disk, or a memory associated with the processor 510, but the entire program and/or parts thereof could alternatively be executed by a device other than the processor 510 and/or embodied in firmware or dedicated hardware. Further, although the example program is described with reference to the flow charts illustrated in Figures 3-4, many other methods of implementing the example computing device 500 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine-readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine-readable instructions may be fragmented and stored on one or more storage devices and/or computing devices (e.g., servers). The machine-readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine-readable instructions may be stored in multiple parts, which are individually compressed, encrypted, and stored on separate computing devices, wherein the parts when decrypted, decompressed, and combined form a set of executable instructions that implement a program such as that described herein.

In another example, the machine-readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine-readable instructions may be configured (e.g., settings stored, data input, network addresses recorded, etc.) before the machine-readable instructions and/or the corresponding program(s) can be executed in whole or in part. Thus, the disclosed machine-readable instructions and/or corresponding program(s) are intended to encompass such machine-readable instructions and/or program(s) regardless of the particular format or state of the machine-readable instructions and/or program(s) when stored or otherwise at rest or in transit.

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example processes of Figures 3-4 may be implemented using executable instructions (e.g., computer and/or machine-readable instructions) stored on a non-transitory computer and/or machine-readable medium such as a hard disk drive, a solid-state storage device (SSD), a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

**"Including" and "comprising" (and all forms and tenses thereof) are used herein to be open ended terms. Thus, whenever a claim employs any form of "include" or "comprise" (e.g., comprises, includes, comprising, including, having, etc.) as a preamble** or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term **"comprising" and "including" are open ended.**

**The term "and/or" when used, for example, in a form such as A, B, and/or C** refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

**As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used** interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

The following examples pertain to further embodiments. Example 1 is an apparatus including processor including one or more processing cores, and a performance monitoring unit (PMU), the PMU including one or more performance monitoring counters; a PMU memory to store a PMU kernel, the PMU kernel including one or more programmable PMU functions; and a PMU processor to load the PMU kernel and concurrently execute the one or more programmable PMU functions of the PMU kernel to concurrently access the one or more performance counters.

In Example 2, the subject matter of Example 1 can optionally include wherein one of the one or more programmable PMU functions uses non-PMU telemetry data of the processor.

In **Example 3, the subject matter of Example 1 can optionally include** wherein at least one of the one or more programmable PMU functions includes specification of one or more PMU events.

In **Example 4, the subject matter of Example 3 can optionally include** wherein the one or more PMU events includes data from at least one performance monitoring counter.

**In Example 5, the subject matter of Example 3 can optionally include** wherein the one or more PMU events comprises an event defined by a software (SW) driver executed by the processor.

**In Example 6, the subject matter of Example 1 can optionally include** wherein the one or more programmable PMU functions are received by the PMU from one or more SW drivers being executed by the processor.

**In Example 7, the subject matter of Example 6 can optionally include** wherein the one or more programmable PMU functions, when concurrently executed, concurrently write data to one or more buffers in the processor and the one or more SW drivers read data from the one or more buffers.

**In Example 8, the subject matter of Example 1 can optionally include** wherein the PMU kernel is received by the PMU from a PMU driver being executed by the processor.

**In Example 9, the subject matter of Example 1 can optionally include** wherein the PMU comprises a PMU kernel start offset configuration model specific register (MSR) to configure a start offset of a memory structure for the PMU kernel and a PMU kernel end offset configuration MSR to configure an end offset of the memory structure for the PMU kernel.

Example 10 is a method including loading a performance monitoring unit (PMU) kernel into a PMU processor of a PMU of a processor, the PMU kernel including one or more programmable PMU functions, the PMU including one or more performance monitoring counters; and concurrently executing the one or more programmable PMU functions of the PMU kernel by the PMU processor to concurrently access the one or more performance counters.

**In Example 11, the subject matter of Example 10 can optionally include** using non-PMU telemetry data of the processor by one of the one or more programmable PMU functions.

**In Example 12, the subject matter of Example 10 can optionally include** wherein at least one of the one or more programmable PMU functions includes specification of one or more PMU events.

**In Example 13, the subject matter of Example 12 can optionally include** wherein the one or more PMU events includes data from at least one performance monitoring counter.

**In Example 14, the subject matter of Example 13 can optionally include** wherein the one or more PMU events comprises an event defined by a software (SW) driver executed by the processor.

**In Example 15, the subject matter of Example 10 can optionally include** receiving the one or more programmable PMU functions by the PMU from one or more SW drivers being executed by the processor.

**In Example 16, the subject matter of Example 15 can optionally include** concurrently writing, by the one or more programmable PMU functions, when concurrently executed, data to one or more buffers in the processor and reading data by the one or more SW drivers from the one or more buffers.

**In Example 17, the subject matter of Example 10 can optionally include** receiving the PMU kernel by the PMU from a PMU driver being executed by the processor.

Example 18 is at least one non-transitory machine-readable storage medium comprising instructions that, when executed, cause a performance monitoring unit (PMU) processor of a PMU of a processor to load a PMU kernel into the PMU processor, the PMU kernel including one or more programmable PMU functions, the PMU including one or more performance monitoring counters; and concurrently execute the one or more programmable PMU functions of the PMU kernel by the PMU processor to concurrently access the one or more performance counters.

**In Example 19, the subject matter of Example 18 can optionally include** instructions that, when executed, use non-PMU telemetry data of the processor by one of the one or more programmable PMU functions.

**In Example 20, the subject matter of Example 18 can optionally include** wherein at least one of the one or more programmable PMU functions includes specification of one or more PMU events.

**In Example 21, the subject matter of Example 21 can optionally include** wherein the one or more PMU events includes data from at least one performance monitoring counter.

**In Example 22, the subject matter of Example 11 can optionally include** wherein the one or more PMU events comprises an event defined by a software (SW) driver executed by the processor.

**In Example 23, the subject matter of Example 1 can optionally include** instructions that, when executed, receive the one or more programmable PMU functions by the PMU from one or more SW drivers being executed by the processor.

**In Example 24, the subject matter of Example 23 can optionally include** instructions that, when executed, concurrently write, by the one or more programmable PMU functions, when concurrently executed, data to one or more buffers in the processor.

**In Example 25, the subject matter of Example 18 can optionally include** instructions that, when executed, receive the PMU kernel by the PMU from a PMU driver being executed by the processor.

Example 26 provides an apparatus comprising means for performing the method of any one of Examples 10-17.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

## Claims

1. A processor comprising:
one or more processing cores, and
a performance monitoring unit (PMU), the PMU including
one or more performance monitoring counters;
a PMU memory to store a PMU kernel, the PMU kernel including one or more programmable PMU functions; and
a PMU processor to load the PMU kernel and concurrently execute the one or more programmable PMU functions of the PMU kernel to concurrently access the one or more performance monitoring counters.

2. The processor of claim 1, wherein one of the one or more programmable PMU functions uses non-PMU telemetry data of the processor.

3. The processor of claim 1, wherein at least one of the one or more programmable PMU functions includes specification of one or more PMU events.

4. The processor of claim 3, wherein the one or more PMU events includes data from at least one performance monitoring counter.

5. The processor of claim 3, wherein the one or more PMU events comprises an event defined by a software (SW) driver executed by the processor.

6. The processor of claim 1, wherein the one or more programmable PMU functions are received by the PMU from one or more SW drivers being executed by the processor.

7. The processor of claim 6, wherein the one or more programmable PMU functions, when concurrently executed, concurrently write data to one or more buffers in the processor and the one or more SW drivers read data from the one or more buffers.

8. The processor of claim 1, wherein the PMU kernel is received by the PMU from a PMU driver being executed by the processor.

9. The processor of claim 1, wherein the PMU comprises a PMU kernel start offset configuration model specific register (MSR) to configure a start offset of a memory structure for the PMU kernel and a PMU kernel end offset configuration MSR to configure an end offset of the memory structure for the PMU kernel.

10. A method comprising:
loading a performance monitoring unit (PMU) kernel into a PMU processor of a PMU of a processor, the PMU kernel including one or more programmable PMU functions, the PMU including one or more performance monitoring counters; and
concurrently executing the one or more programmable PMU functions of the PMU kernel by the PMU processor to concurrently access the one or more performance monitoring counters.

11. The method of claim 10, comprising using non-PMU telemetry data of the processor by one of the one or more programmable PMU functions.

12. The method of claim 10, wherein at least one of the one or more programmable PMU functions includes specification of one or more PMU events.

13. The method of claim 12, wherein the one or more PMU events includes data from at least one performance monitoring counter.

14. The method of claim 12, wherein the one or more PMU events comprises an event defined by a software (SW) driver executed by the processor.

15. Machine-readable storage including machine-readable instructions, when executed, to implement a method or realize an apparatus as claimed in any preceding claim.
